# EUROPEAN PATENT SPECIFICATION

(11) **EP 0 878 944 B1**
(45) Date of publication and mention of the grant of the patent: **30.11.2005**
(21) Application number: 98303788.8
(22) Date of filing: 14.05.1998
(51) Int. Cl.: H04M 1/31

(54) **Network control unit**
Netzwerksteuereinheit
Unité de commande de réseau

(30) Priority: 16.05.1997 JP 12680297
(43) Date of publication of application: 18.11.1998
(73) Proprietor: Brother Kogyo Kabushiki Kaisha, Nagoya-shi, Aichi-ken 467 (JP)
(72) Inventor: Igushi, Naoki, c/o Brother Kogyo K.K., Nagoya-shi, Aichi-ken 467 (JP)
(74) Representative: Senior, Alan Murray

(56) References cited:
- EP-A- 0 351 009
- EP-A- 0 419 363
- EP-A- 0 748 104
- DE-C- 3 541 548
- US-A- 4 723 267
- US-A- 5 425 096

## Description

The present invention relates to a network control unit which connects a telephone switchboard and a communication device such as a facsimile machine or telephone.

Telephone circuit lines extending from a telephone switchboard and communication devices such as a facsimile machine are connected generally through a network control unit (NCU). The telephone switchboard detects a communication condition of each communication device through operation of the network control unit. The telephone circuit transmits signals such as voice to each communication device through the network control unit.

Network control units for connecting switchboards and communication, devices are discussed in EP 0 419 363 (SAGEM), EP 0 351 009 (PHILIPS) and US 4 723 267 (DAVISON).

This network control unit may be constructed as shown in Fig. 3 and generally operates as follows. While the communication device 31 is not in communication operation, relay circuits CR3, CR4 are connected to terminals B3, B4, respectively. As no loop circuit (direct current loop circuit) which returns to a telephone switchboard 5 relative to a direct current component transmitted from the telephone switchboard 5 through a telephone circuit is formed, the telephone switchboard 5 detects the non-communication operation of the communication device 31.

When the communication device 31 receives a signal, on the other hand, the relay circuits CR3, CR4 are connected to terminals M3, M4, respectively. As the direct current loop circuit is formed from circuit lines La to Lb through D3, 03, M3, P3, P4, M4, 04 and D4, including a circuit line transformer 33 as a part thereof, the telephone switchboard 5 detects, based on formation of the direct current loop, the receiving of the signal at the communication device 31 and the communication operation of the communication device 31.

When the communication device 31 receives the signal and the direct current component passes through the direct current loop circuit, a dial pulse (DP) transmitting circuit 32 transmits a dial pulse indicative of certification of the communication device 31 to the telephone switchboard 5. The telephone switchboard 5 discriminates by the dial pulse the communication device 31 from other communication devices.

While the communication device 31 is in communication operation, a signal comprising an alternating current component such as voice is superimposed on the direct current component and is transmitted to the primary side of the circuit line transformer 4 which is included in a circuit formed by the relay circuits CR3, CR4 being connected to the terminals M3, M4. Only the signal comprising the alternating current component such as voice is transferred to the secondary side of the circuit line transformer 33 and to the communication device 31.

The telephone switchboard 5 detects, as described above, whether each communication device is in communication operation or in non-communication operation based on the formation of the direct current loop circuit in the network control unit. Thus, as shown in Fig. 3, the direct current loop circuit is formed separately from the DP transmitting circuit 32 in the network control unit.

In the case that the direct current loop circuit is formed separately from the DP transmitting circuit 32, the circuit line transformer 33 which forms a part of the direct current loop circuit must be a type capable of passing the direct current component therethrough, or the direct current loop circuit must be provided by a circuit including as a part thereof a choke coil or the like which passes the direct current component bypassing the circuit line transformer 33.

Thus, the direct current loop circuit as constructed above will necessitate a large circuit line transformer or a number of circuit components. As a result, the network control unit necessitates increase in the size, in the number of component parts and in the manufacturing cost.

It is therefore an object of the present invention to provide a network control unit which does not necessitate increase in the size, in the number of component parts nor in the manufacturing cost.

For achieving the above object, the present invention as defined in claim 1 is characterized by a network control unit, which is connected between a telephone switchboard and a communication device and comprises a circuit line transformer for superimposing an alternating current component indicative of a voice signal of the communication device on a circuit line current from the telephone switchboard and for extracting the alternating current component superimposed on the circuit line current to produce the extracted component to the communication device, a dial pulse transmitting circuit for transmitting a dial pulse signal to the telephone switchboard, and a direct current loop circuit provided in the dial pulse transmitting circuit for forming a direct current loop of the circuit line current thereby to enable communication between the telephone switchboard and the communication device.

According to this construction, when manufacturing the network control unit, by providing the direct current loop circuit in the dial pulse transmitting circuit, electronic component parts may be mounted in succession on the same circuit board while maintaining both of the circuits thereon. Therefore, the component parts of both circuits may be mounted in a short period of time on a circuit board having the substantially same area as that of the circuit board for only the dial pulse transmitting circuit. As a result, in comparison with the conventional construction in which the direct current loop circuit is formed by the circuit line transformer, the circuit line transformer may be reduced in size and in cost and does not necessitates assembling loss or increase in the component parts cost which will be caused when both circuits are provided. Thus, the network control unit may be reduced in size and in cost.

The invention as defined in claim 2 is characterized by the network control unit according to claim 1, wherein the direct current loop circuit includes a rectifying and smoothing circuit for smoothing the alternating current component of the circuit line current when the direct current loop is formed.

According to this construction, the transfer of the alternating current component to the direct current loop when the direct current loop is formed may be reduced and the transfer of the alternating current component to the circuit line transformer side may be effected efficiently. As a result, the extraction of the alternating current component may be effected efficiently by the circuit line transformer.

The invention as defined in claim 3 is characterized by the network control unit according to claim 1 or 2, wherein the direct current loop circuit includes a current changing circuit capable of changing a current amount of the circuit line current when the direct current loop is formed.

According to this construction, the circuit line current may be matched to various use condition when the direct current loop is formed.

The invention as defined in claim 4 is characterized by the network control unit according to claim 3, wherein the direct current loop circuit includes a circuit line current detecting circuit for detecting the current amount of the circuit line current, and a current setting circuit for setting the current changing circuit so that detection values of the circuit line current detecting circuit correspond to various condition.

According to this construction, as the current amount is set in correspondence with the various condition while monitoring the circuit line current, errors in changing the setting may be obviated even when many condition exist.

The present invention will be more clearly understood from the following description, given by way of example only, with reference to the accompanying drawings in which:

Fig. 1 is a circuit diagram showing a network control unit and its connection with a telephone switchboard and the like.

Fig. 2 is a circuit diagram showing a detailed construction of the network control unit.

Fig. 3 is a circuit diagram showing a network control unit and its connection with a telephone switchboard and the like.

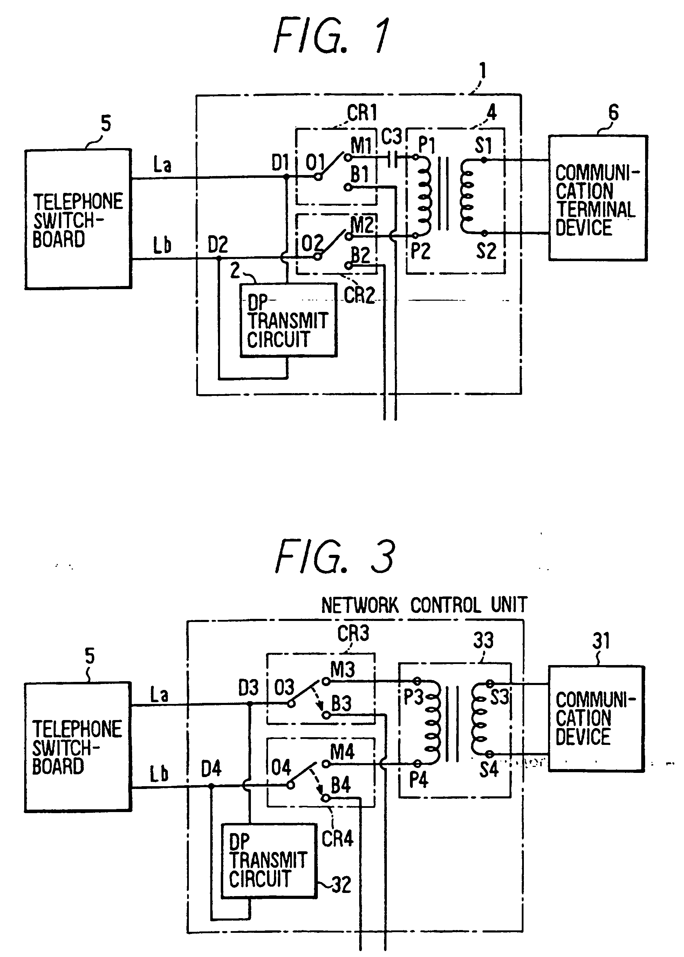

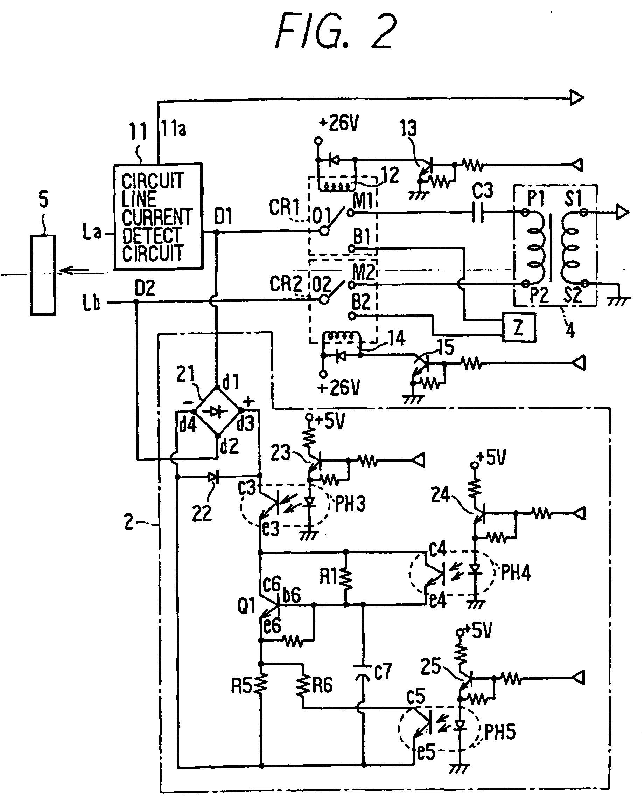

A network control unit according to the present invention will be described with reference to Figs. 1 and 2.

Fig. 1 is a circuit diagram showing a circuit connection of a network control unit 1 with a telephone switchboard or the like.

The network control unit 1 primarily comprises a dial pulse (DP) transmitting circuit 2, relay CR1, relay CR2, capacitor C3 and a circuit line transformer 4.

The DP transmitting circuit 2 is connected to telephone circuit lines La, Lb extending from a telephone switchboard through terminals D1, D2 respectively.

The DP transmitting circuit 2 transmits, as described below, transmits a dial pulse to the telephone switchboard 5 based on specified connection condition of the relays CR1, CR2 when a communication terminal device 6 receives a signal. The telephone switchboard 5, receiving the dial pulse as a certification of the communication terminal device 6, discriminates the communication terminal device 6 from other communication devices.

In this invention, the DP transmitting circuit 2 forms a direct current loop.

The relays CR1, CR2 are connected in series with the circuit lines La, Lb respectively at the other side of the terminals D1, D2 which is opposite to the telephone switchboard 5.

The relay CR1 has a terminal O1 connected to the terminal D1 and terminals M1, B1 switchably connectable to the terminal O1 by the relay operation.

The relay CR2 has a terminal 02 connected to the terminal D2 and terminals M2, B2 switchably connectable to the terminal 02 by the relay operation.

A capacitor C3 and a transformer 4 are connected in series between the terminals M1, M2 of the relays CR1, CR2.

The capacitor C3 is connected to the terminal M1 and a terminal P1 of the primary side of the transformer 4 thereby to restrict a direct current component in the current supplied from the telephone circuit lines La, lb from passing to the transformer 4.

The transformer 4 has the primary side which comprises the terminal P1, terminal P2 connected to the terminal M2 and a primary coil connected between the terminals P1, P2. The transformer 4 has the secondary side which has terminals S1, S2 disposed to oppose the primary side terminal P1, P2. A secondary coil is connected between the terminals S1, S2. The alternating current signal supplied to the primary side coil is multiplied with a transformation ratio determined by the turns of the secondary side coil against the turns of the primary side coil and thereafter produced in the secondary side.

The communication terminal device 6 is connected to the terminals S1, S2 of the secondary side of the transformer 4.

In the network control unit 1 as constructed above, while the communication terminal device 6 is in the non-communication operation, the relays CR1, CR2 are connected to the terminals B1, B2 thereby to maintain the transformer 4 disconnected from the telephone circuit lines. Further, as described in detail below, the DP transmitting circuit 2 is in the condition that its internal circuit is not connected as the direct current loop circuit.

When the communication terminal device 6 receives a signal, connection in the relays CR1, CR2 are switched to the terminals M1, M2. In the DP transmitting circuit 2, its internal circuit is connected as the direct current loop circuit. Thus, the telephone circuit lines La, Lb and the DP transmission circuit 2 provides the direct current loop circuit. That is, the direct current loop for the direct current component transmitted from the telephone switchboard 5 is provided from the circuit line La to the circuit line Lb through terminal D1, DP transmitting circuit 2 and terminal D2. The direct current component passes only through the direct current loop as provided above because of the capacitor C3 and is not passed to the transformer 4. The telephone switchboard discriminates from the direct current component the communication terminal device 6 in communication operation.

The voice signal comprising the alternating current component is supplied from the circuit lines La, Lb to the communication terminal device 6 through the relays CR1, CR2 connected to the terminals M1, M2, primary side terminals P1, P2 and secondary side terminals S1, S2 of the transformer 4.

The network control unit 1, more particularly the DP transmitting circuit 2, will be described below in more detail.

Fig. 2 shows a detailed circuit construction of the network control unit 1 including internal circuit construction of the DP transmitting circuit 2.

A circuit line current detecting circuit 11 is connected in series with the circuit line La to detect the direct current which flows through the circuit line La. The amount of circuit line current detected by the circuit line current detecting circuit 11 is monitored via a lead line 11a shown in Fig. 2. It will be also possible to monitor the amount of the circuit line current alternatively by an external device not shown in this figure.

The relay CR1 is constructed to switch the terminal M1, B1 which is to be connected the terminal O1 by operation of a solenoid 12. The solenoid 12 is connected to change its operation condition in response to a change in the supply of electric power from an electric power source 26 caused by the operation of a transistor 13. The transistor 13 operates in response to signals indicative of signal receiving at the communication terminal device 6 and termination of use of the communication terminal device 6.

The relay CR2 is constructed to operate in the similar manner as the relay CR1 operates, that is, to switch the terminal M2, B2 by operation of a solenoid 14 in response to operation of a transistor 15.

The DP transmitting circuit 2 is constructed primarily by a diode bridge 21 comprising a plurality of diodes, photo transistor PH3, photo transistor PH4, photo transistor PH5, transistor Q1, resistor R1 and capacitor C7.

In the diode bridge 21, each diode is connected between terminals d1, d3, between terminals d3, d2, between terminals d2, d4, and between terminals d4, d1.

In the diode bridge 21, the terminal d1 is connected to the circuit line La through the terminal D1 while the terminal d2 is connected to the circuit line Lb through the terminal D2. The diode bridge is so connected that the potential at the terminal d3 becomes higher than the potential at the terminal d4. The following circuits are connected between the terminals d3, d4. A diode 22 is provided for circuit protection.

The photo transistor PH3 is connected to the terminal d3 through its collector terminal c3. The photo transistor PH3 changes its conduction between the collector terminal c3 and the emitter terminal e3 in response to a change in the electric power supply from the +5V power supply source caused by a transistor 23. The transistor 23 operates in response to the signals indicative of signal receiving at the communication terminal device 6 and termination of use of the communication terminal device 6. That is, the conduction state between the collector terminal c3 and the emitter terminal e3 is changed by the change in the light emission of a photo diode in the photo transistor PH3 in response to the change in the electric power supply from the +5V power supply caused by the transistor 23.

The transistor Q1, resistor R1 and the photo transistor PH4 are connected in parallel to the emitter terminal e3 of the photo transistor PH3.

The transistor Q1 is connected to the emitter terminal e3 through its collector terminal c6, and the photo transistor PH4 is connected to the emitter terminal e3 through its collector terminal c4.

The resistor R1 is connected between the collector terminal c6 and the base terminal b6.

The photo transistor PH4 changes its conduction between the collector terminal c4 and the emitter terminal e4 in response to a change in the electric power supply from the +5V power supply source caused by a transistor 24. The transistor 24 operates in response to the signals indicative of signal receiving at the communication terminal device 6 and termination of use of the communication terminal device 6. That is, the conduction state between the collector terminal c4 and the emitter terminal e4 is changed by the change in the light emission of a photo diode in the photo transistor PH4 in response to the change in the electric power supply from the +5V power supply caused by the transistor 24.

The capacitor C7 is connected between the base terminal b6 of the transistor Q1 and the terminal d4 of the diode bridge 21.

A resistor R5 and a series circuit of a resistor R6 and a photo transistor PH5 are connected in parallel to the emitter terminal e6 of the transistor Q1.

The photo transistor PH5 conducts between its collector terminal c5 and emitter terminal e5 when its photo diode emits light in response to a change in the electric power supply from the +5V power supply source caused by a transistor 25. The transistor 25 operates in response to a specific signal applied thereto.

As the photo transistor PH5 connects the resistors R5, R6 parallelly to the emitter terminal e6 of the transistor Q1 when turned on, the resistance between the emitter terminal e6 and the terminal d4 of the diode bridge 21 reduces. On the other hand, when the photo transistor PH5 is not turned on, the resistance between the emitter terminal e6 and the terminal d4 of the diode bridge 21 is determined by only the resistor R5.

In this embodiment, the specific signal is applied to the transistor 25 to turn on the photo transistor PH5 based on the amount of the circuit line current detected by the circuit line current detecting circuit 11, that is, when the amount of the circuit line current is less than a predetermined reference. Thus, the parallel circuit of resistors R5, R6 is provided to increase the amount of the circuit line current. On the contrary, when the amount of the circuit line current is more than the predetermined reference, the specific signal is applied to the transistor 25 to turn off the photo transistor 5. Thus, the amount of the circuit line current is changeable by the change in the conduction state of the photo transistor PH5. Though the amount of the current to be passed as the circuit line current differs depending on the national regulations regarding the communication terminal device, the regulation of each country can be satisfied by changing the conduction state of the photo transistor PH5.

This circuit comprising the resistor R6 and photo transistor PH5 and connectable in parallel with the resistor R5 constitutes to a current changing circuit.

Although the amount of the circuit line current detected by the circuit line current detecting circuit 11 is monitored by a known direct current loop control unit (not shown) which is connected externally through the lead line 11a, the direct current loop control unit is so constructed to be capable of setting the predetermined reference of the amount of the circuit line current depending on the country in which the network control unit 1 is used, by having therein a data table storing data of the national regulations regarding the amount of the current to be passed through the direct current loop circuit. The direct current loop control unit produces the specific signal to turn on the photo transistor PH5 when the amount of the circuit line current monitored via the lead line 11a is less than the predetermined reference. On the contrary, when the amount of the circuit line current monitored is more than the predetermined reference, the direct current loop control unit produces the other specific signal to turn off the photo transistor PH5.

The lead line 11a, known direct current loop control unit which is not shown, and photo transistor PH5 constitute a current setting circuit.

A high impedance transformer or a ringer detecting circuit is connected between the terminals B1 of relay CR1 and the terminal B2 of relay CR2.

In the above construction, when the alternating current signal is applied to the terminals D1, D2, the potential at the terminal d3 against the terminal d4 in the diode bridge 21 becomes a ripple component having only a positive potential and no component having a negative potential is produced.

When the photo transistor PH3 is in conduction, the ripple component having only the positive potential produced from the diode bridge 21 is applied to the transistor Q1.

As the base terminal b6 of the transistor Q1 is connected to the resistor R1 and capacitor C7 in parallel, a voltage which is smoothed by a time constant of those resistance and the capacitance is applied stably. Therefore, the value of current flowing to the base terminal b6 of the transistor Q1 can be maintained at a constant value and hence the value of current flowing to the collector terminal c6 of the transistor Q1 can be maintained at a constant value as well. Thus, when evaluated from the circuit lines La, Lb, the DP transmission circuit 2 is constructed to have the high impedance against the alternating current signal. As the alternating current component to be transmitted to the DP transmisssion circuit 2 can be reduced, the alternating current component can be passed to the circuit line transformer side efficiently.

The diode bridge 21, photo transistor PH3, transistor Q1 and capacitor C7 constitute a rectifying and smoothing circuit.

Next, operation of the DP transmitting circuit 2 is described.

### (1) In case of non-communication operation of the communication terminal device 6:

In this case, the relays CR1, CR2 are connected to the terminals B1, B2, respectively. The photo transistor PH3 is not in conduction, while the photo transistor PH 4 is in conduction.

As the photo transistor PH3 is not in conduction, the DP transmitting circuit 2 cannot form the direct current loop.

### (2) In case of communication operation of the communication terminal device 6:

In this case, the relays CR1, CR2 are connected to the terminals M1, M2, respectively. The photo transistor PH3 is in conduction, while the photo transistor PH 4 is not in conduction.

As the photo transistor PH3 is in conduction, the DP transmitting circuit 2 can form the direct current loop.

### (3) In case of transmitting the dial pulse from the DP transmisssion circuit:

In this case, the relays CR1, CR2 are connected to the terminals M1, B2, respectively.

The photo transistor PH4 is in conduction, and the resistor R1 connected between the collector terminal c4 and the emitter terminal e4 in the photo transistor PH4 is shorted. With the resistor R1 being thus shorted, the waveform of the voltage which the DP transmitting circuit 2 produces to the circuit lines La, Lb is shaped into a rectangular waveform.

According to the above-described network control unit 1, as the direct current loop circuit including the DP transmitting circuit 2 is formed from the circuit line La to circuit line Lb through the terminal D1, DP transmission circuit 2 and terminal D2, circuit component parts of both of the direct current loop circuit and DP transmisssion circuit can be mounted in a short time on a circuit board having the substantially same area as that of the circuit board for only the DP transmisssion circuit, in manufacturing the network control unit which includes both the direct current loop circuit and DP transmisssion circuit. Therefore, in comparison with the conventional construction in which the direct current loop circuit is formed by the circuit line transformer 33, I the circuit line transformer 4 may be reduced in size and in cost and does not necessitates assembling loss or increase in the component parts cost which will be caused when both circuits are provided. Thus, the network control unit may be reduced in size and in cost.

The direct current loop circuit formed in the network control unit 1 has the rectifying and smoothing circuit which is constructed by a circuit by connecting the diode bridge 21, photo transistor PH3, transistor Q1 and capacitor C7. According to this construction, the transfer of the alternating current component to the direct current loop when the direct current loop is formed may be reduced and the transfer of the alternating current component to the circuit line transformer 4 may be effected efficiently. As a result, the extraction of the alternating current component may be effected efficiently by the circuit line transformer.

Further, the current changing circuit which is constructed by a circuit comprising the resistor R6 and photo transistor R5 to be connected in parallel with the resistor R5 is provided, it becomes possible to change the amount of the circuit line current. When the direct current loop is formed, the circuit line current may be matched to various use condition.

Still further, the amount of the circuit line current is set to various condition by way of changing the conduction state of the photo transistor PH5 by the direct current loop control unit (not shown) while monitoring the amount of the circuit line current by the circuit line current detecting circuit 11, errors in changing the setting may be obviated even when many condition exist.

As described above, the present invention as defined in claim 1 is characterized by the network control unit, which is connected between the telephone switchboard and the communication device and comprises the circuit line transformer for superimposing the alternating current component indicative of the voice signal of the communication device on the circuit line current from the telephone switchboard and for extracting the alternating current component superimposed on the circuit line current to produce the extracted component to the communication device, the DP transmitting circuit for transmitting the dial pulse signal to the telephone switchboard, and the direct current loop circuit provided in the dial pulse transmitting circuit for forming the direct current loop of the circuit line current thereby to enable communication between the telephone switchboard and the communication device. Therefore, when manufacturing the network control unit having the direct current loop circuit and the dial pulse circuit, the electronic component parts of both circuits may be mounted in a short time on the circuit board having the substantially same area as that of the circuit board for only the DP transmitting circuit. As a result, in comparison with the conventional construction in which the direct current loop circuit is formed by the circuit line transformer, the circuit line transformer may be reduced in size and in cost and does not neccesitates assembling loss or increase in the component parts cost which will be caused when both circuits are provided. Thus, it is advantageous that the network control unit may be reduced in size and in cost.

According to the invention as defined in claim 2, the direct current loop circuit includes the rectifying and smoothing circuit for smoothing the alternating current component of the circuit line current when the direct current loop is formed. Thus, it is advantageous that the superimposition and extraction of the alternating current component in the circuit line transformer may be effected efficiently by removing the alternating current component when the direct current loop is formed.

According to the invention as defined in claim 3, the direct current loop circuit includes the current changing circuit capable of changing the amount of the circuit line current when the direct current loop is formed. Thus, it is advantageous that the circuit line current may be matched to various use condition when the direct current loop is formed.

According to the invention as defined in claim 4, the direct current loop circuit includes the circuit line current detecting circuit for detecting the amount of the circuit line current, and the current setting circuit for setting the current changing circuit so that detection values of the circuit line current detecting circuit correspond to various condition. Thus, as the amount of the current is set in correspondence with the various condition while monitoring the circuit line current, errors in changing the setting may be obviated even when many condition exist.

## Claims

1. A network control unit for connection between a telephone switch board (5) and a communication device (6) comprising:
a circuit line transformer (4) for superimposing an alternating current component indicative of a voice signal of the communication device (6) on a circuit line current from the telephone switchboard (5) and for extracting the alternating current component superimposed on the circuit line current to produce the extracted component to the communication device (6);
a dial pulse transmitting circuit (2) for transmitting a dial pulse signal to the telephone switchboard (5);
a direct current loop circuit provided in the dial pulse transmitting circuit (2) for forming a direct current loop of the circuit line current thereby to enable communication between the telephone switchboard (5) and the communication device (6); wherein
the direct current loop circuit includes a rectifying and smoothing circuit (21,PH3,Ql,C7)for smoothing the alternating current component of the circuit line current when the direct current loop is formed; and
a current changing circuit capable of changing a current amount of the circuit line current when the direct current loop is formed; **characterised in that**
the direct current loop circuit is in a parallel relation to a circuit provided by the switchboard and the circuit line transformer; and the network control unit further comprises:
a circuit line current detecting circuit for detecting the current amount of the circuit line current; and
a current setting circuit for setting the current changing circuit in dependence on detection values of the circuit line current detecting circuit.

2. A telephone network including a network control unit according to claim 1 connected between a telephone switchboard and a communication device.

## Patentansprüche

1. Netzwerksteuereinheit zur Verbindung zwischen einer Telefonachalttafal (5) und einer Kommunikationseinrichtung (6) mit:
einem Schaltungsleitungstransformator (4) zum Überlagern einer Wechselstromkomponente, die ein Stimmensignal der Kommunikationseinrichtung (6) bezeichnet, über einen Schaltungsleitungsstrom von der Telefonschalttafel (5) und zum Extrahieren der Wechselstromkomponente, die dem Schaltungsleitungsstrom überlagert ist, zum Erzeugen der extrahierten Komponente für die Kommunikationseinrichtung (6);
einer Wählpulssendeschaltung (3) zum Senden eines Wählpulssignales zu der Telefonschalttafel (5);
einer Gleichstromschleifenschaltung, die in der Wählpulssendeschaltung (2) vorgesehen ist, zum Bilden einer Gleichstromschleife des Schaltungsleitungsstromes, wodurch eine Kommunikation zwischen der Telefonschalttafel (5) und der Kommunikationseinrirhtung (6) ermöglicht wird;
worin die Gleichstromschleifenschaltung eine gleichrichtende und glättende Schaltung (21, PH3, Q1, C7) zum Glätten der Wechselstromkomponente des Schaltungsleitungsstromes, wenn die Gleichstromschleife gebildet ist, enthält; und
einer Stromänderungeschaltung, die einen Strombetrag des Schaltungsleitungsstromes ändern kann, wenn die Gleichstromschleife gebildet ist;
**dadurch gekennzeichnet,**
**dass** die Gleichstromschleifenschaltung in einer parallelen Beziehung zu einer Schaltung vorgesehen ist, die durch die Schalttafel und den Schaltungeleitungstransformator vorgesehen ist; und
**dass** die Netzwerksteuereinheit weiter aufweist:
eine Schaltungsleitungsstromerfassungsschaltung zum Ertassen des Strombetrages des Schaltungsleitungsstromes; und
eine Stromsetzschaltung zum Setzen der Stromänderungsschaltung in Abhängigkeit von Erfassungswerten der Schaltungsleitungsstromerfassungsschaltung,

2. Telefonnetzwerk mit einer Netzwerksteuereinheit nach Anspruch 1, die zwischen eine Telefonschalttafel und eine Kommunikationseinrichtung geschaltet ist.

## Revendications

1. Unité de commande de réseau destinée à une connexion entre un tableau de commutation de téléphone (5) et un dispositif de communication (6) comprenant :
un transformateur de ligne de circuit (4) destiné à superposer une composante de courant alternatif indicative d'un signal vocal du dispositif de communication (6) à un courant de ligne de circuit provenant du tableau de commutation de téléphone (5) et destiné à extraire la composante de courant alternatif superposée au courant de ligne de circuit afin de produire la composante extraite pour le dispositif de communication (6),
un circuit de transmission d'impulsions de numérotation (2) destiné à transmettre un signal impulsionnel de numérotation au tableau de commutation de téléphone (5),
un circuit à boucle de courant continu prévu dans le circuit de transmission d'impulsions de numérotation (2) destiné à former une boucle de courant continu du courant de ligne de circuit, en permettant ainsi une communication entre le tableau de commutation de téléphone (5) et le dispositif de communication (6), où
le circuit à boucle de courant continu comprend un circuit de redressement et de lissage (21, PH3, Q1, C7) destiné à lisser la composante de courant alternatif du courant de ligne de circuit lorsque la boucle de courant continu est formée, et
un circuit de variation de courant permettant de faire varier l'intensité de courant du courant de ligne de circuit lorsque la boucle de courant continu est formée, **caractérisée en ce que**
le circuit à boucle de courant continu est dans une relation parallèle avec un circuit fourni par le tableau de commutation et le transformateur de ligne de circuit, et l'unité de commande de réseau comprend en outre :
un circuit de détection de courant de ligne de circuit destiné à détecter l'intensité de courant du courant de ligne de circuit, et
un circuit de réglage de courant destiné à régler le circuit de variation de courant en fonction de valeurs de détection du circuit de détection de courant de ligne de circuit.

2. Réseau téléphonique comprenant une unité de commande de réseau selon la revendication 1, connectée entre un tableau de commutation de téléphone et un dispositif de communication.
